# EUROPÄISCHE PATENTANMELDUNG

(11) **EP 3 297 137 A1**
(43) Veröffentlichungstag der Anmeldung: **21.03.2018**
(21) Anmeldenummer: 16189656.8
(22) Anmeldetag: 20.09.2016
(51) Int. Cl.: H02K 9/10, F24F 3/14, B01D 53/26

(54) **KÜHLUNG EINES ELEKTRISCHEN GENERATORS**

(71) Anmelder: Siemens Aktiengesellschaft, 80333 München (DE)
(72) Erfinder: Kowalski, Waldemar, 45472 Mülheim an der Ruhr (DE); Lehmann, Christoph, 47506 Neukirchen-Vluyn (DE)

(57) **Zusammenfassung**

Die Erfindung betrifft eine Anordnung zum Kühlen der Kühlluft einer elektrodynamischen Maschine, insbesondere eines elektrischen Generators (1), wobei der herkömmliche Luft-Wasser-Kühler (6) durch eine modifizierte Kühlereinheit ersetzt wird, die einen Lufttrockner (11), einen Luft-Wasser-Kühler (6) und einen Verdunstungskühler (12) aufweist.

## Beschreibung

Die Erfindung betrifft eine Anordnung zum Kühlen der Kühlluft einer elektrodynamischen Maschine, insbesondere eines elektrischen Generators, mit einem Luftkühler, insbesondere Luft-Wasser-Kühler, der zum Kühlen von Kühlluft ausgebildet ist.

Desweiteren betrifft die Erfindung ein Verfahren zum Kühlen der Kühlluft eines elektrischen Generators.

Elektrische Generatoren sind schon seit längerem bekannt. Ihre Wirkung beruht auf der Umwandlung von Bewegungsenergie bzw. mechanischer Energie in elektrische Energie, wobei durch Bewegung eines elektrischen Leiters in einem Magnetfeld eine Spannung in dem Leiter induziert wird.

Zur Erzeugung von elektrischer Energie kommen heutzutage große elektrische Kraftwerksgeneratores zum Einsatz. Bei deren Betrieb kommt es aufgrund von Verlustleistungen wegen Hysterese durch Reibungsverluste durch Lager und Dichtungen usw. zu einer erheblichen Erwärmung des elektrischen Generators, die einen negativen Einfluss auf dessen Wirkungsgrad und somit auf dessen Effizienz hat.

Deswegen muss eine in Form von Wärme auftretende Verlustleistung abgeführt werden, weil der elektrische Generator sonst überhitzen kann. Eine Kühlung von elektrischen Generatoren ist deswegen besonders wünschenswert. Allerdings bieten die bisherigen Konzepte zur Kühlung von elektrischen Generatoren noch viel Verbesserungspotential. Beispielsweise werden Kraftwerksgeneratoren bis zu einer Leistung von 300MW mittels einer Zwangslüftung gekühlt. Bei elektrischen Generatoren dieser Leistungsklasse stößt diese Art der Kühlung an eine physikalische Grenze, da eine zur Kühlung des elektrischen Generators erforderliche Luftgeschwindigkeit so groß ist, dass eine Kühlwirkung durch Reibungsverluste in der Luft in dem elektrischen Generator aufgehoben wird. Überlegungen zur Verbesserung der Kühlwirkung stellen sehr hohe Anforderungen an eine Geometrie des elektrischen Generators.

Elektrodynamische Maschinen wie beispielsweise elektrische Generatoren umfassen im Wesentlichen einen Rotor, der mit einer Rotorwicklung ausgebildet ist, durch den ein elektrischer Strom fließt und dadurch ein magnetisches Feld erzeugt wird und einen Stator, der eine Statorwicklung umfasst, der um die Rotorwicklung angeordnet ist, wobei durch das sich verändernde magnetische Feld, erzeugt durch den Rotor, eine elektrische Spannung in der Statorwicklung induziert wird.

Im Betrieb fließen hohe Ströme durch die Rotorwicklung und die Statorwicklung, was zu einer vergleichsweise hohen Wärmeentwicklung führt. Daher werden elektrische Generatoren gekühlt. Neben der Kühlung mit Luft ist auch eine Kühlung mit Wasserstoff und Wasser bekannt. Bei einer Kühlung mit Kühlluft werden die Rotorwicklung als auch die Statorwicklung mit Kühlluft gekühlt. Die Kühlluft strömt hierbei durch geeignete Kühlbohrungen durch die Rotorwicklung und durch die Statorwicklung und wird hierbei erwärmt. In einem Kühlkreislauf der Kühlluft wird dann die Kühlluft in einem Kühler abgekühlt. Die somit abgekühlte Kühlluft strömt in diesem Kühlluftkreislauf wiederum durch die Statorwicklung und die Rotorwicklung.

Die Kühlung eines luftgekühlten Generators mit geschlossenem Kühlkreislauf ist durch die sich ergebende Kaltlufttemperatur durch die Temperatur des den Kühler durchströmenden Wassers begrenzt. Dies wiederum begrenzt die Leistung des Generators.

Aufgabe der Erfindung ist es, eine verbesserte Kühlung für eine elektrodynamische Maschine, insbesondere elektrischen Generator anzubieten.

Gelöst wird diese Aufgabe durch eine Anordnung zum Kühlen der Kühlluft einer elektrodynamischen Maschine, insbesondere eines elektrischen Generators, mit einem Luftkühler, insbesondere Luft-Wasser-Kühler, der zum Kühlen von Kühlluft ausgebildet ist, wobei ein Lufttrockner, der die in der elektrodynamischen Maschine erwärmte Kühlluft trocknet, wobei die im Lufttrockner getrocknete Kühlluft zum Luftkühler strömt, und einen Verdunstungskühler, der die aus dem Luftkühler kommende Kühlluft weiter abkühlt, wobei die Abkühlung der Kühlluft durch Verdunstung erfolgt.

Desweiteren wird die Aufgabe gelöst durch ein Verfahren zum Kühlen der Kühlluft eines elektrischen Generators, wobei die erwärmte Kühlluft zunächst in einem Lufttrockner getrocknet wird und anschließend in einem Luftkühler gekühlt wird, wobei in einem nächsten Schritt die Kühlluft weiter abgekühlt wird in einem Verdunstungskühler, wo die Abkühlung durch Verdunstung erfolgt.

Die Erfindung schlägt somit eine Kühlanordnung für einen luftgekühlten Generator mit geschlossenem Kühlkreislauf vor, der aus einem Lufttrockner, einem Luft-Wasser-Kühler und einem Verdunstungskühler besteht. Diese Anordnung kann in einem bestehenden Generator dort eingebaut werden, wo sich gegenwertig der übliche Luft-Wasser-Kühler befindet.

Vorteilhafte Weiterbildungen sind in den Unteransprüchen angegeben.

Die Erfindung schlägt eine Kühleranordnung vor, die wie folgt beschrieben werden kann. Aus einem Luft-Wasser-Kühler tritt trockene, auf 40°C gekühlte Luft aus. Diese Kühlluft durchströmt einen Verdunstungskühler und kühlt sich dort weiter ab. Die Abkühlspanne hängt von der Trockenheit der eintretenden Luft, dem Aufbau des Verdunstungskühlers und der Temperatur des dort eingesetzten Wassers ab. Der Verdunstungskühler nimmt die Luftfeuchtigkeit auf. Allerdings muss hier weiter darauf geachtet werden, dass der Taupunkt der Luft nicht zu stark ansteigt, um Hochspannungsüberschläge an den spannungsführenden Generatorkomponenten zu vermeiden, wobei als Abkühlspanne 10K angenommen werden.

In einem nächsten Schritt wird die auf 30°C abgekühlte Kühlluft durch den Lüfter zu der Stator- und der Rotorwicklung befördert, um die einzelnen Generatorkomponenten zu kühlen. Dabei erwärmt sich die Kühlluft durch Aufnahme der Verlustleistungen.

In einem nächsten Schritt passiert die somit erwärmte Kühlluft einen Lufttrockner und wird luftgetrocknet, wobei sich die Kühlluft hier etwas erwärmt.

In einem weiteren Schritt strömt die getrocknete Luft durch den Luft-Wasser-Kühler und wird dort wieder auf 40°C herunter gekühlt.

Durch diese neue Kühlanordnung kann die Kühllufttemperatur des Generators abgesenkt und damit die Leistung angehoben werden.

Die erfindungsgemäße Anordnung kann derart ausgebildet werden, dass an bestehenden Generatoren die Kühlung komplett durch die erfindungsgemäße Anordnung ausgetauscht werden kann.

In einer ersten vorteilhaften Weiterbildung ist der Lufttrockner als Adsorptionstrocker ausgebildet, wobei die zu trocknende Kühlluft über einen Adsorber geleitet wird, an dem der Wasserdampf kondensiert. Ein Adsorptionstrockner ist eine vergleichsweise günstige Möglichkeit Luft zu trocknen.

In einer weiteren vorteilhaften Weiterbildung ist der Adsorber als Silicagel ausgebildet. Der Adsorber wird in regelmäßigen Abständen durch Trocknung mit heißer Luft regeneriert.

In einer weiteren vorteilhaften Weiterbildung weist der Luftkühler eine Rohrbündel-Bauform auf, bei der Wasser durch Röhrchen strömt, die quer zu der sie durchströmenden Kühlluft angeordnet sind.

In einer weiteren vorteilhaften Weiterbildung ist der Verdunstungskühler aus einer lamellenförmigen Anordnung ausgebildet, über die Wasser rieselt und von der Kühlluft durchströmt wird. Die lamellenförmige Anordnung vergrößert die der Luft ausgesetzte Wasseroberfläche, so dass der Verdunstungseffekt optimiert wird.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Gleiche Bauteile oder Bauteile mit gleicher Funktion sind dabei mit gleichen Bezugszeichen gekennzeichnet.

Ausführungsbeispiele der Erfindung werden nachfolgend anhand der Zeichnungen beschrieben. Diese soll die Ausführungsbeispiele nicht maßgeblich darstellen, vielmehr ist die Zeichnung, wo zur Erläuterungen dienlich, in schematisierter und/oder leicht verzerrter Form ausgeführt.

Im Hinblick auf Ergänzungen der in der Zeichnung unmittelbar erkennbaren Lehren, wird auf den einschlägigen Stand der Technik verwiesen.

Es zeigen:
- Figur 1: eine schematische Querschnittsansicht eines Kühlkreislaufes in einem elektrischen Generator,
- Figur 2: eine schematische Darstellung des Kühlkreislaufes gemäß dem Stand der Technik,
- Figur 3: eine schematische Darstellung eines neuen Kühlkreislaufes,
- Figur 4: eine schematische Darstellung der einzelnen Komponenten des Kühlkreislaufes,
- Figur 5: eine schematische Darstellung des Kühlkreislaufes.

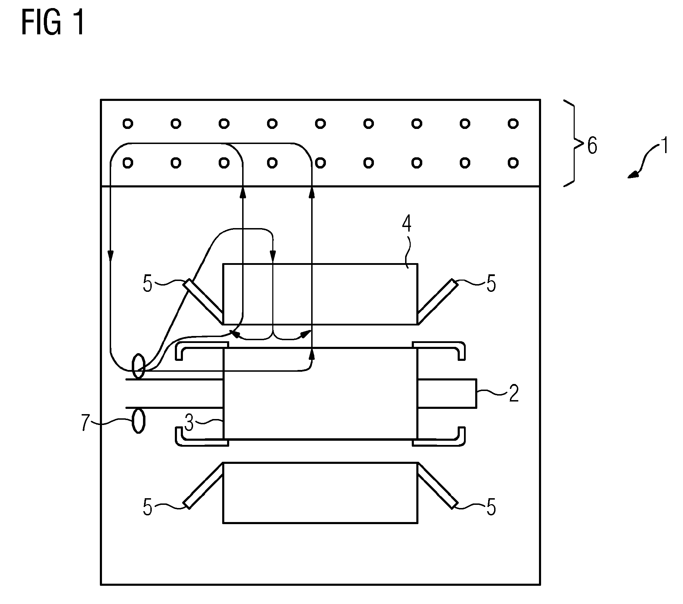

Figur 1 zeigt eine schematische Querschnittsansicht eines Kühlkreislaufes eines elektrischen Generators 1. Der elektrische Generator 1 umfasst einen drehbar gelagerten Rotor 2. Der drehbar gelagerte Rotor 2 umfasst eine Rotorwicklung 3, durch die im Betrieb ein elektrischer Strom fließt. Um die Rotorwicklung 3 ist eine Ständerwicklung 4 angeordnet, in die eine elektrische Spannung induziert wird. Die Ständerwicklung 4 weist einen Ständerwickelkopf 5 auf.

Die Kühlung des elektrischen Generators 1 erfolgt mit Kühlluft und wird wie folgt beschrieben: in einem herkömmlichen Luft-Wasser-Kühler kommt erwärmte Kühlluft, die in der Statorwicklung als auch in der Rotorwicklung 3 erwärmt wurde, hinein. Im Luft-Wasser-Kühler 6 wird die Kühlluft gekühlt und über eine Gebläse 7 in Richtung Rotorwicklung 3 und Ständerwicklung 4 geführt. Die Strömungsrichtung der Kühlluft ist durch die Pfeile angegeben und bildet einen Kreislauf. Die Anordnung gemäß Figur 1 zeigt den Stand der Technik.

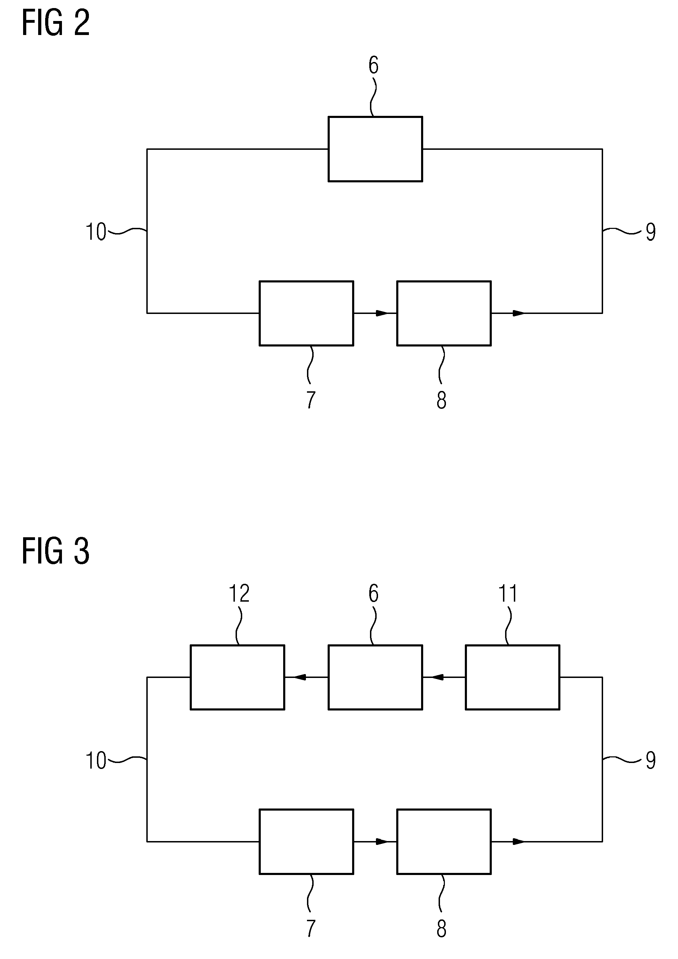

Die Figur 2 zeigt eine schematische Darstellung des Kühlkreislaufes. Ein Gebläse 7 bewegt Kühlluft zu Generatoraktivteilen 8, wobei sich die Kühlluft dort erwärmt und zu warmer Luft 9 wird. Diese warme Luft 9 wird zu dem Luft-Wasser-Kühler 6 geführt und dort abgekühlt, so dass darauf kalte Luft 10 entsteht. Diese kalte Luft 10 wird über das Gebläse 7 wiederrum zu den Generatoraktivteilen 8, wie beispielsweise die Rotorwicklung 3 und Ständerwicklung 4 geführt. Dadurch wird ein geschlossener Kreislauf der Kühlluft gebildet.

Die Figur 3 zeigt eine erfindungsgemäße Anordnung zum Kühlen der Kühlluft einer elektrodynamischen Maschine, insbesondere eines elektrischen Generators 1. Zunächst wird in dem Gebläse 7 Kühlluft zu den Generatoraktivteilen 8 geführt. Die Generatoraktivteile 8 sind beispielsweise die Rotorwicklung 3 und die Ständerwicklung 4. Dabei erwärmt sich die Kühlluft und wird zu warmer Luft 9. Diese warme Luft 9 gelangt zu einem Lufttrockner, der die in der elektrodynamischen Maschine erwärmte Kühlluft trocknet. In einem nächsten Schritt gelangt die Kühlluft vom Lufttrockner 11 zum Luft-Wasser-Kühler 6, der zum Kühlen von Kühlluft ausgebildet ist. Von dort gelangt die Kühlluft zu einem Verdunstungskühler 12, der die aus dem Luftkühler, der als Luft-Wasser-Kühler 6 ausgebildet ist, kommende Kühlluft weiter abkühlt, wobei die Abkühlung der Kühlluft durch Verdunstung erfolgt.

Die Kühlluft gelangt vom Verdunstungskühler 12 wieder zum Gebläse 7.

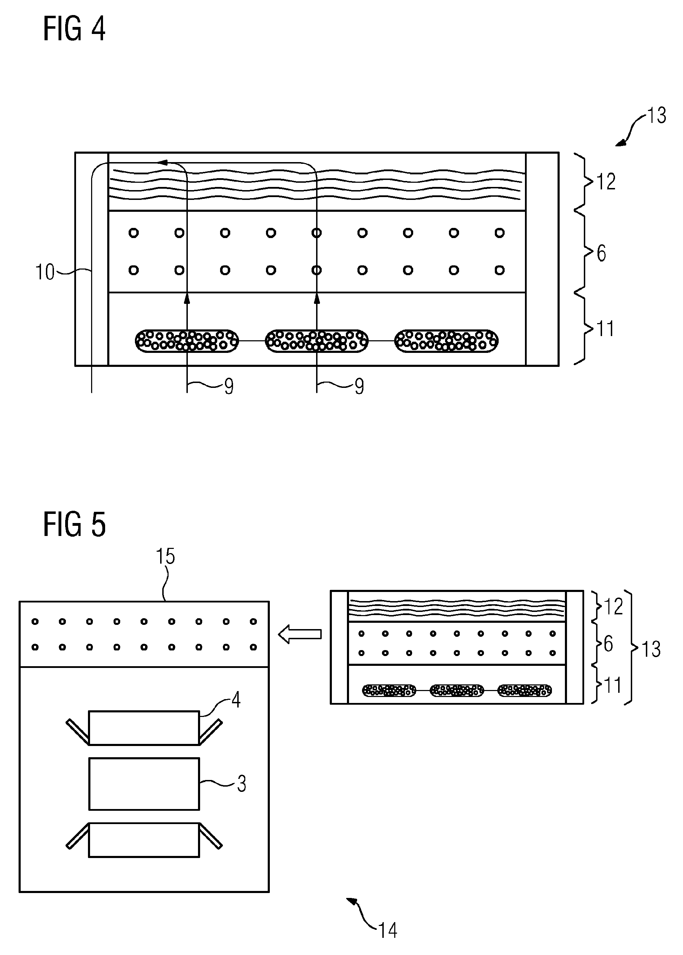

Die Figur 4 zeigt in schematisierter Weise die Anordnung zum Kühlen der Kühlluft einer elektrodynamischen Maschine, insbesondere eines elektrischen Generators 1. Die in Figur 4 dargestellten Komponenten sind der Lufttrockner 11, der als Adsorptionstrockner ausgebildet ist, wobei die zu trocknende Kühlluft über einen Adsorber geleitet wird, an dem der Wasserdampf kondensiert.

Der Adsorber kann ein Silicagel sein. Nach dem Lufttrockner 11 gelangt die getrocknete, aber erwärmte Kühlluft zu einem Luftkühler, der als Luft-Wasser-Kühler 6 ausgebildet ist. Dieser Luftkühler ist in einer Rührbündel-Bauform ausgebildet, bei der Wasser durch Röhrchen strömt, die quer zu der sie durchströmenden Luftkühlung angeordnet sind. In einem nächsten Schritt gelangt die Kühlluft zu einem Verdunstungskühler 12. Dieser Verdunstungskühler 12 ist aus einer lamellenförmigen Anordnung ausgebildet, über die Wasser rieselt und von der Kühlluft durchströmt wird. Die Kühlluft wird hierbei weiter abgekühlt, nimmt aber einen Anteil an Feuchte auf. Nach dieser Anordnung strömt die somit kalte Luft zu einem Gebläse (nicht dargestellt) und kühlt die Generatorkomponenten.

Die Figur 5 zeigt in schematisierter Weise, dass die Anordnung 13 zum Kühlen eines Generators an einem bestehenden Generator 14, der mit einem herkömmlichen Luftkühler 15 ausgebildet ist, derart modifiziert werden kann, indem der herkömmliche Luftkühler 15 durch die neue Anordnung 13 komplett ersetzt wird. Somit liefert die Erfindung die Möglichkeit auch im Servicefall eingesetzt zu werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Anordnung (13) zum Kühlen der Kühlluft einer elektrodynamischen Maschine, insbesondere eines elektrischen Generators (1),
mit einem Luftkühler, insbesondere Luft-Wasser-Kühler (6), der zum Kühlen von Kühlluft ausgebildet ist, **gekennzeichnet durch**
einen Lufttrockner (11), der die in der elektrodynamischen Maschine erwärmte Kühlluft trocknet,
wobei die im Lufttrockner getrocknete Kühlluft zum Luftkühler strömt,
und einen Verdunstungskühler (12), der die aus dem Luftkühler kommende Kühlluft weiter abkühlt, wobei die Abkühlung der Kühlluft **durch** Verdunstung erfolgt.

2. Anordnung (13) nach Anspruch 1,
wobei der Lufttrockner als Adsorptionstrocker ausgebildet ist,
wobei die zu trocknende Kühlluft über einen Adsorber geleitet wird, an dem der Wasserdampf kondensiert.

3. Anordnung (13) nach Anspruch 2,
wobei der Adsorber ein Silicagel ist.

4. Anordnung (13) nach einem der Ansprüche 1 bis 2,
wobei der Luftkühler eine Rohrbündel-Bauform aufweist,
bei der Wasser durch Röhrchen strömt, die quer zu der sie durchströmenden Kühlluft angeordnet sind.

5. Anordnung (13) nach einem der vorhergehenden Ansprüche, wobei der
Verdunstungskühler (12) aus einer lamellenförmigen Anordnung ausgebildet ist, über die Wasser rieselt und von der Kühlluft durchströmt wird.

6. Verfahren zum Kühlen der Kühlluft eines elektrischen Generators (1),
wobei die erwärmte Kühlluft zunächst in einem Lufttrockner (11) getrocknet wird und anschließend in einem Luftkühler gekühlt wird,
wobei in einem nächsten Schritt die Kühlluft weiter abgekühlt wird in einem Verdunstungskühler (12), wo die Abkühlung durch Verdunstung erfolgt.
